(19) Europäisches Patentamt
European Patent Office
Office européen des brevets

(11) **EP 2 956 984 B1**

(12) **FASCICULE DE BREVET EUROPEEN**

(45) Date de publication et mention
de la délivrance du brevet:
**04.04.2018 Bulletin 2018/14**

(21) Numéro de dépôt: **14708616.9**

(22) Date de dépôt: **04.02.2014**

(51) Int Cl.:
*H01M 10/44* (2006.01)  *B60L 11/18* (2006.01)
*H01M 10/613* (2014.01)  *H01M 10/615* (2014.01)
*H01M 10/625* (2014.01)  *H01M 10/633* (2014.01)

(86) Numéro de dépôt international:
**PCT/FR2014/050199**

(87) Numéro de publication internationale:
**WO 2014/125189 (21.08.2014 Gazette 2014/34)**

(54) **PROCEDE DE REGULATION DE LA TEMPERATURE D'UNE BATTERIE D'ACCUMULATEURS**

VERFAHREN ZUR REGELUNG DER TEMPERATUR EINES AKKUS

METHOD OF REGULATING THE TEMPERATURE OF AN ACCUMULATOR BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2013 FR 1351335**

(43) Date de publication de la demande:
**23.12.2015 Bulletin 2015/52**

(73) Titulaire: **Renault S.A.S.**
**92100 Boulogne-Billancourt (FR)**

(72) Inventeurs:
• **MARCHAL, Caroline**
  **F-78180 Montigny-le-Bretonneux (FR)**
• **RECOUVREUR, Philippe**
  **F-92120 Montrouge (FR)**

(56) Documents cités:
**FR-A1- 2 967 303       JP-A- H0 773 907**
**US-A1- 2009 024 256**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE AUQUEL SE RAPPORTE L'INVENTION

La présente invention concerne de manière générale les batteries d'accumulateurs.

Elle concerne plus particulièrement une méthode de régulation de la température d'une batterie d'accumulateurs en cours de charge ou de décharge.

Elle concerne également un véhicule automobile comportant une batterie d'accumulateurs, un chargeur pour charger ladite batterie d'accumulateurs, un moteur électrique alimenté par ladite batterie d'accumulateurs, un moyen d'acquisition d'un état de charge de ladite batterie d'accumulateurs, un moyen de mesure de la température de ladite batterie d'accumulateurs, et des moyens de contrôle de la température de ladite batterie d'accumulateurs.

ARRIERE-PLAN TECHNOLOGIQUE

On connaît du document US2011/0316486 un véhicule automobile du type précité.

Dans un tel véhicule, on cherche généralement à charger la batterie d'accumulateurs dans une plage de températures nominale, à l'intérieur de laquelle les performances de charge de la batterie d'accumulateurs sont optimales.

En dessous de cette plage de températures, la charge de la batterie est en effet plus longue et incomplète. La batterie présente en outre une autonomie plus faible et des performances réduites.

Au-dessus de cette plage de températures, toute charge ou décharge de la batterie d'accumulateurs a un effet négatif sur la durée de vie de cette batterie.

Dans le document précité, il est alors prévu, exclusivement pendant la charge de la batterie d'accumulateurs, de réchauffer ou de refroidir cette batterie grâce à des moyens de contrôle de température, de telle sorte que la température de la batterie reste confinée à l'intérieur de cette plage de températures nominale.

Le document JP07073907 décrit une méthode de régulation de la température d'une batterie selon laquelle la température future de la batterie est estimée à partir de l'évolution de la température en fonction du temps obtenue par des mesures successives de la température.

Si la solution proposée par le document US2011/0316486 s'avère efficace, elle provoque toutefois une consommation électrique excessive pour alimenter les moyens de contrôle de température. Elle est donc difficilement applicable lorsque la batterie se décharge pour alimenter en courant le moteur électrique. De plus, elle ne permet pas d'adapter le contrôle en température au comportement du conducteur, le phénomène d'échauffement étant accentué en cas de conduite sévère.

OBJET DE L'INVENTION

Afin de remédier à l'inconvénient précité de l'état de la technique, la présente invention propose d'adapter l'alimentation électrique des moyens de contrôle de température en fonction des conditions rencontrées, sur le principe d'un apprentissage, notamment l'apprentissage du profil de conduite de l'utilisateur.

Plus particulièrement, on propose selon l'invention une méthode de régulation telle que définie dans l'introduction, dans laquelle il est prévu des étapes consistant à :

a) acquérir des valeurs successives d'un état de charge qui est relatif au niveau de charge de ladite batterie d'accumulateurs,
b) mesurer deux valeurs de la température de ladite batterie d'accumulateurs lorsque ledit état de charge prend successivement une première valeur et une seconde valeur,
c) estimer, en fonction des valeurs de la température mesurées à l'étape b), la valeur de la température de ladite batterie d'accumulateurs lorsque ledit état de charge aura atteint une troisième valeur, et
d) piloter des moyens de contrôle de la température de ladite batterie d'accumulateurs en fonction de la valeur de la température estimée à l'étape c).

Ainsi, grâce à l'invention, il est possible de mesurer les fluctuations de la température de la batterie d'accumulateurs lorsque l'état de charge varie entre ses première et seconde valeurs, d'en déduire une probable fluctuation de température de la batterie lorsque l'état de charge variera entre ses seconde et troisième valeurs, et de piloter les moyens de contrôle au plus juste, en réduisant ainsi la consommation électrique de ces moyens de contrôle.

L'invention permet par ailleurs de s'assurer de manière plus sûre que la température de la batterie d'accumulateurs reste dans sa plage nominale.

D'autres caractéristiques avantageuses et non limitatives de la méthode de régulation conforme à l'invention sont les suivantes :

- ladite étape a) est réalisée en continue ou est répétée à intervalles de temps réguliers et réduits ;
- les étapes b) à d) sont répétées en boucle ;
- lesdites première, seconde et troisième valeurs de l'état de charge sont prédéterminées ;
- l'une au moins desdites première, seconde et troisième valeurs de l'état de charge est déterminée en fonction de la valeur de l'état de charge de la batterie d'accumulateurs en début de charge ou de décharge ;
- l'étape c) est réalisée à l'aide d'une fonction mathématique affine qui associe, à chaque état de charge, une température correspondante ;
- à l'étape d), lesdits moyens de contrôle sont pilotés de telle manière que la température de la batterie d'accumulateurs atteigne une valeur cible ;

-   ladite valeur cible est prédéterminée ; ou
-   ladite valeur cible est déterminée en fonction de l'un et/ou l'autre des paramètres suivants : la température extérieure, la première seconde ou troisième valeur dudit état de charge, une information selon laquelle la batterie d'accumulateurs est en charge ou en décharge, la durée de décharge moyenne de ladite batterie d'accumulateurs, la durée de charge moyenne de ladite batterie d'accumulateurs.

L'invention propose également un véhicule automobile tel que défini en introduction, comportant en outre une unité de pilotage desdits moyens de contrôle, adaptée en mettre en oeuvre un procédé de régulation tel que précité.

DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

-   la figure 1 est une vue schématique d'un véhicule automobile selon l'invention, et
-   la figure 2 est un graphique illustrant l'évolution de la température d'une batterie d'accumulateurs du véhicule automobile de la figure 1, en fonction de l'état de charge de cette batterie d'accumulateurs, lors d'une décharge de cette batterie.

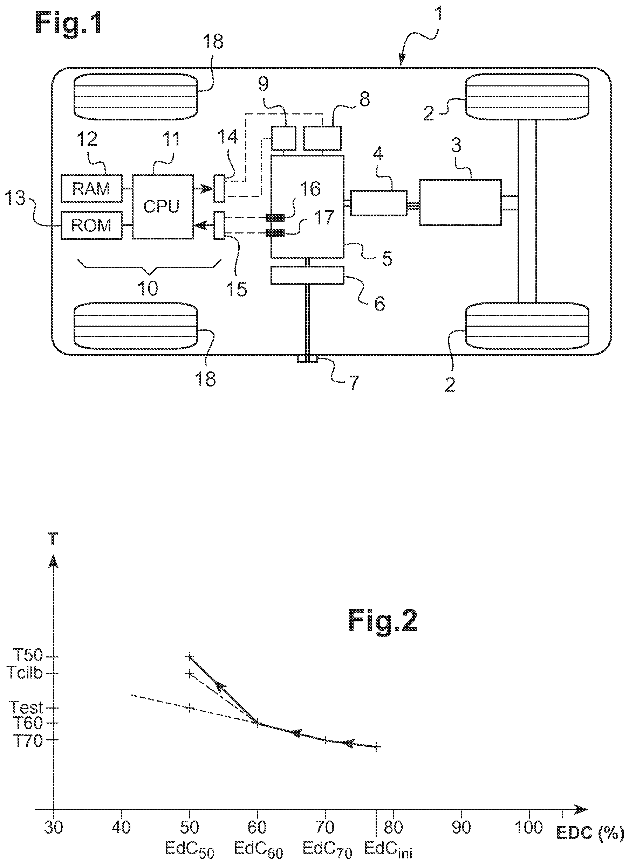

Sur la figure 1, on a représenté très schématiquement un véhicule automobile 1 qui comporte deux roues motrices 2 et deux roues non-motrices 18.

Il s'agit ici d'un véhicule électrique. En variante, il pourrait également s'agir d'un véhicule hybride.

Le véhicule automobile 1 représenté sur la figure 1 comporte donc un moteur électrique 3 permettant d'entraîner les deux roues motrices 2 en rotation.

Il comporte également une batterie d'accumulateurs 5 qui permet d'alimenter ce moteur électrique 3 en courant, via un onduleur 4. Classiquement, cet onduleur 4 est conçu pour transformer le courant continu débité par la batterie d'accumulateurs 5 en un courant triphasé.

Le véhicule automobile 1 comporte aussi un chargeur 6 équipé d'une prise de courant 7 qui est accessible à l'usager pour y brancher une fiche électrique connectée à un réseau électrique extérieur. Ce chargeur 6 est alors prévu pour réguler le courant issu du réseau électrique extérieur afin de charger au mieux la batterie d'accumulateurs 5.

Le véhicule automobile 1 comporte par ailleurs des moyens de contrôle 8, 9 de la température T de la batterie d'accumulateurs 5.

Tels que représentés sur la figure 1, ces moyens de contrôle comportent notamment un moyen de réchauffement 8 et un moyen de refroidissement 9 de la batterie d'accumulateurs 5. Ces moyens de réchauffement 8 et de refroidissement 9 peuvent être distincts (en se présentant par exemple sous la forme d'une résistance électrique et d'un ventilateur électrique) ou être confondus (en se présentant par exemple sous la forme d'une cellule Peltier).

Ces moyens de réchauffement 8 et de refroidissement 9 nécessitent quoi qu'il en soit de l'énergie pour fonctionner. Cette énergie est issue, directement ou indirectement, de la batterie d'accumulateurs 5, si bien qu'il convient de l'économiser au mieux pour accroître l'autonomie du véhicule automobile 1 (en particulier lorsque la batterie d'accumulateurs se décharge pour alimenter en courant le moteur électrique). C'est d'ailleurs l'objet de la présente invention.

Le véhicule automobile 1 comporte à cet effet un moyen de mesure 17 de la température T de cette batterie d'accumulateurs 5 et un moyen d'acquisition 16 d'un état de charge EdC de la batterie d'accumulateurs 5.

Le moyen de mesure 17 peut classiquement se présenter sous la forme d'une sonde de température implantée à l'intérieur de la batterie d'accumulateurs 5.

Le moyen d'acquisition 16 est quant à lui prévu pour déterminer le niveau de charge de la batterie d'accumulateurs. Il acquiert ici un état de charge qui s'exprime en pourcentage.

Cet état de charge EdC est considéré égal à 100% lorsque le niveau de charge de la batterie d'accumulateurs est maximum. Il décroît lorsque la batterie d'accumulateurs 5 alimente le moteur électrique 3 en courant. Il croît lorsque la batterie d'accumulateurs 5 est alimentée par le chargeur 6.

Pour piloter ses différents organes, le véhicule automobile 1 comporte un calculateur 10 qui comprend un processeur 11 (CPU), une mémoire vive 12 (RAM), une mémoire morte 13 (ROM) et différentes interfaces d'entrée 15 et de sortie 14.

Grâce à ses interfaces d'entrée 15, le calculateur 10 est adapté à recevoir des signaux d'entrée provenant des moyens de mesure 17 et d'acquisition 16. Il est ainsi adapté à acquérir la température T et l'état de charge EdC de la batterie d'accumulateurs 5.

Grâce à un logiciel installé dans sa mémoire morte 13, le calculateur 10 est adapté à calculer, pour chaque condition de fonctionnement du véhicule automobile 1, des consignes de pilotage des moyens de réchauffement 8 et de refroidissement 9.

Enfin, grâce à ses interfaces de sortie 14, le calculateur 10 est adapté à transmettre ces consignes de pilotage aux moyens de réchauffement 8 et de refroidissement 9 afin de réguler au mieux la température de la batterie d'accumulateurs 5.

Selon une caractéristique particulièrement avantageuse de l'invention, le calculateur 10 est adapté à mettre en oeuvre une méthode de régulation de la température T de la batterie d'accumulateurs 5 qui comprend des étapes consistant à :

> a) acquérir les valeurs $EdC_{60}$, $EdC_{70}$ successives de l'état de charge EdC,
> b) mesurer deux valeurs de la température T de la batterie d'accumulateurs 5, dont une première valeur $T_{70}$ lorsque l'état de charge atteint une première valeur $EdC_{70}$ puis une seconde valeur $T_{60}$ lorsque l'état de charge atteint une seconde valeur $EdC_{60}$,
> c) estimer, en fonction des valeurs $T_{60}$, $T_{70}$ mesurées à l'étape b), la valeur $T_{est}$ de la température T de la batterie d'accumulateurs 5 lorsque l'état de charge EdC aura atteint une troisième valeur $EdC_{50}$, et
> d) piloter les moyens de réchauffement 8 et de refroidissement 9 en fonction de la valeur $T_{est}$ estimée à l'étape c).

Dans la suite de cet exposé, on pourra décrire plus en détail chacune de ces étapes a) à d), en référence à la figure 2.

Sur cette figure 2, on a en effet représenté, en trait continu, l'évolution de la température T de la batterie d'accumulateurs 5 en fonction de l'état de charge EdC, lorsque la batterie d'accumulateurs 5 alimente le moteur électrique 3 et se décharge en conséquence.

L'étape a) d'acquisition de valeurs successives de l'état de charge EdC est préférentiellement réalisée en continue, à l'aide du moyen d'acquisition 16.

Elle pourrait bien entendu être réalisée à intervalles de temps réguliers, pour autant que cet intervalle de temps soit réduit. Cet intervalle de temps sera alors préférentiellement inférieur ou égal à 5 minutes.

Selon l'exemple représenté sur la figure 2, on observe que la valeur $EdC_{ini}$ de l'état de charge EdC au démarrage du véhicule automobile est d'environ 75 %. La valeur de l'état de charge EdC décroît ensuite progressivement jusqu'à 50%.

On observe également sur cette figure que la température T croît lorsque la batterie d'accumulateurs 5 se décharge.

L'étape b) consiste alors, lorsque l'état de charge EdC atteint la première valeur $EdC_{70}$, à mesurer la première valeur $T_{70}$ de la température T de la batterie d'accumulateurs 5 puis, lorsque l'état de charge EdC atteint la seconde valeur $EdC_{60}$, à mesurer la seconde valeur $T_{60}$ de la température T de la batterie d'accumulateurs 5.

Dans l'exemple représenté sur la figure 2, les valeurs $EdC_{60}$, $EdC_{70}$ de l'état de charge EdC auxquelles on mesure la température T de la batterie d'accumulateurs 5 sont prédéterminées.

Ici, ces valeurs $EdC_{60}$, $EdC_{70}$ sont choisies égales à des multiples de 10% (10%, 20%, ...). Ainsi, la première valeur $T_{70}$ de la température T est mesurée pour une valeur $EdC_{70}$ d'état de charge égale à 70% et la seconde valeur $T_{60}$ de la température T est mesurée pour une valeur $EdC_{60}$ d'état de charge EdC égale à 60%.

En variante, ces valeurs $EdC_{60}$, $EdC_{70}$ d'état de charge EdC pourraient être déterminées autrement.

A titre d'exemple, elles pourraient être déterminées en fonction de la valeur ($EdC_{ini}$) de l'état de charge de la batterie d'accumulateurs au début de la décharge (au démarrage du moteur électrique). Alors, dans l'exemple considéré, la première valeur de la température serait mesurée lorsque la valeur de l'état de charge serait égale à 75% et la seconde valeur de la température serait mesurée lorsque la valeur de l'état de charge serait égale à 65%.

Encore en variante, on pourrait prévoir de mesurer la température de la batterie d'accumulateurs avec une fréquence plus grande (par exemple tous les 5% de décharge). Cette fréquence ne doit en revanche pas être trop élevée, de manière que les différences entre les deux valeurs de température mesurées soient représentatives de l'inertie thermique de la batterie d'accumulateurs.

L'étape c) est une étape prédictive qui consiste à estimer, en fonction des valeurs $T_{60}$, $T_{70}$ de température T mesurées à l'étape b), la valeur $T_{est}$ de la température T de la batterie d'accumulateurs 5 lorsque l'état de charge EdC aura atteint une troisième valeur $EdC_{50}$.

Ici encore, cette troisième valeur $EdC_{50}$ est prédéterminée. Elle est choisie inférieure de 10% à la seconde valeur $EdC_{60}$.

En variante, elle pourrait être déterminée autrement, notamment en fonction de la valeur ($EdC_{ini}$) de l'état de charge de la batterie d'accumulateurs au début de la décharge.

Le calcul de la valeur $T_{est}$ estimée de la température T est ici réalisé à l'aide d'une fonction mathématique affine qui associe, à chaque état de charge EdC, une température T correspondante.

On comprend que cette méthode se base sur le postulat selon lequel la température T de la batterie d'accumulateurs 5 variera de la même manière entre 70% et 60% de charge qu'entre 60% et 50% de charge.

La valeur $T_{est}$ est ainsi obtenue à l'aide du calcul suivant :

$$T_{est} = 2.T_{60} - T_{70}.$$

La dernière étape d) consiste à piloter les moyens de réchauffement 8 et de refroidissement 9 en fonction de la valeur $T_{est}$ estimée à l'étape c), de manière que la température T de la batterie d'accumulateurs 5 atteigne plus rapidement la plage de température nominale de cette batterie (c'est-à-dire la plage de température à l'intérieur de laquelle la batterie d'accumulateurs 5 présente des performances optimales).

Cette étape est opérée de telle manière que, lorsque l'état de charge EdC aura atteint sa troisième

valeur EdC$_{50}$, la température T de la batterie d'accumulateurs 5 atteindra une valeur cible T$_{cib}$.

Dans l'exemple représenté sur la figure 2, cette valeur cible T$_{cib}$ sera prédéterminée, de manière à être comprise dans la plage de températures nominale de la batterie d'accumulateurs 5.

La puissance électrique $\Delta P$ à fournir au moyen de réchauffement 8 (si T$_{cib}$ est supérieur à T$_{est}$) ou au moyen de refroidissement 9 (si T$_{cib}$ est inférieur à T$_{est}$) pour que la température T de la batterie d'accumulateurs 5 atteigne cette valeur cible T$_{cib}$ est alors calculée à l'aide de la formule suivante :

$$\Delta P = a.\left( \frac{T_{60} - T_{cib}}{60\% - 50\%} - \frac{T_{70} - T_{60}}{70\% - 60\%} \right).\frac{dEdC}{dt},$$

avec a un coefficient dépendant du type de la batterie d'accumulateurs 5.

En pratique, comme le montre la figure 2, cette étape d) ne permet pas d'atteindre exactement la valeur cible T$_{cib}$ de la température T, notamment du fait des approximations réalisées dans le calcul de la puissance électrique $\Delta P$.

Les étapes b) à d) sont alors répétées en boucle, ici tous les 10% de décharge de la batterie d'accumulateurs 5, de manière que la température T de la batterie d'accumulateurs 5 s'approche au mieux de la valeur cible T$_{cib}$.

Comme cela a été exposé supra, sur la figure 2, on a représenté un cycle de décharge de la batterie d'accumulateurs 5.

Lors d'un cycle de charge (au cours duquel l'état de charge EdC croîtra), les étapes a) à d) seront mises en oeuvre de manière homologue, afin que la température T de la batterie d'accumulateurs 5 s'approche au mieux de la valeur cible T$_{cib}$.

La présente invention n'est nullement limitée au mode de réalisation décrit et représenté, mais l'homme du métier saura y apporter toute variante conforme à son esprit.

En particulier, on pourrait prévoir que la valeur cible ne soit pas prédéterminée, mais qu'elle soit au contraire déterminée en fonction de divers paramètres.

Ainsi, on pourrait prévoir de déterminer la valeur cible en fonction de la température extérieure, de l'état de santé de la batterie (par exemple en fonction de l'évolution de sa résistance interne), ou encore de la puissance de charge ou décharge pouvant être délivrée par la batterie. La valeur cible pourrait notamment être choisie d'autant plus faible que la température extérieure serait élevée, pour tenir compte de l'élévation naturelle de température après que la température T aura atteint cette valeur cible.

On pourrait également prévoir de déterminer la valeur cible en fonction de l'une ou l'autre des première, seconde et troisième valeurs de l'état de charge. La valeur cible pourrait notamment être choisie d'autant plus faible que la valeur d'état de charge considérée serait grande, pour tenir compte de la durée de décharge restante (après que la température T aura atteint cette valeur cible) au cours de laquelle la batterie continuera de s'échauffer.

On pourrait aussi prévoir de déterminer la valeur cible en fonction d'une information selon laquelle la batterie d'accumulateurs est en charge ou en décharge. La valeur cible pourrait notamment être choisie plus faible si la batterie d'accumulateurs est en charge, pour tenir de compte de réchauffement qui est plus grand en charge qu'en décharge.

On pourrait par ailleurs aussi prévoir de déterminer la valeur cible en fonction de la durée de décharge ou de charge moyenne de la batterie d'accumulateurs. En effet, si l'utilisateur a pour habitude de laisser son véhicule en charge sur une courte durée, on pourra prévoir de réduire la puissance électrique à délivrer au moyen de réchauffement ou de refroidissement, en supposant que cette courte durée de charge ne permettra pas d'atteindre suffisamment vite la plage de température nominale de la batterie d'accumulateurs.

Selon une autre variante de réalisation de l'invention, on pourra prévoir de délivrer une puissance électrique initiale prédéterminée au moyen de réchauffement ou de refroidissement, lors du démarrage du véhicule, de manière que la température de la batterie d'accumulateurs atteigne plus rapidement la valeur cible. Ainsi, sur l'exemple représenté sur la figure 2, on pourra prévoir de mesurer la valeur de la température T au démarrage du moteur, puis, en fonction de cette valeur, de délivrer une puissance électrique initiale au moyen de réchauffement ou au moyen de refroidissement tant que l'état de charge n'a pas atteint 60 %. La puissance électrique fournie ensuite (entre 60% et 50%) sera alors adaptée en conséquence, selon la méthode exposée supra.

Selon une autre variante de réalisation de l'invention, on pourra prévoir, à l'étape b), de relever un plus grand nombre de valeurs de température, par exemple trois valeurs, puis, à l'étape c), d'estimer la valeur de température à l'aide d'une fonction d'interpolation non affine qui dépend de ces trois valeurs.

**Revendications**

1.  Méthode de régulation de la température (T) d'une batterie d'accumulateurs (5) en cours de charge ou de décharge, **caractérisée en ce qu'**elle comprend des étapes consistant à :

    a) acquérir des valeurs (EdC$_{60}$, EdC$_{70}$) successives d'un état de charge (EdC) qui est relatif au niveau de charge de ladite batterie d'accumulateurs (5),
    b) mesurer deux valeurs (T$_{60}$, T$_{70}$) de la température (T) de ladite batterie d'accumulateurs (5) lorsque ledit état de charge prend successive-

ment une première valeur (EdC$_{70}$) et une seconde valeur (EdC$_{60}$),

c) estimer, en fonction des valeurs (T$_{60}$, T$_{70}$) de la température (T) mesurées à l'étape b), la valeur (T$_{est}$) de la température (T) de ladite batterie d'accumulateurs (5) lorsque ledit état de charge (EdC) aura atteint une troisième valeur (EdC$_{50}$), et

d) piloter des moyens de contrôle (8, 9) de la température (T) de ladite batterie d'accumulateurs (5) en fonction de la valeur (T$_{est}$) de la température (T) estimée à l'étape c).

2.  Méthode de régulation selon la revendication précédente, selon laquelle ladite étape a) est réalisée en continue ou est répétée à intervalles de temps réguliers.

3.  Méthode de régulation selon l'une des revendications précédentes, selon laquelle les étapes b) à d) sont répétées en boucle.

4.  Méthode de régulation selon l'une des revendications 1 à 3, selon laquelle lesdites première, seconde et troisième valeurs (EdC$_{50}$, EdC$_{60}$, EdC$_{70}$) de l'état de charge (EdC) sont prédéterminées.

5.  Méthode de régulation selon l'une des revendications 1 à 3, selon laquelle l'une au moins desdites première, seconde et troisième valeurs (EdC$_{50}$, EdC$_{60}$, EdC$_{70}$) de l'état de charge (EdC) est déterminée en fonction de la valeur (EdC$_{ini}$) de l'état de charge (EdC) de la batterie d'accumulateurs (5) en début de charge ou de décharge.

6.  Méthode de régulation selon l'une des revendications précédentes, selon laquelle l'étape c) est réalisée à l'aide d'une fonction mathématique affine qui associe, à chaque état de charge (EdC), une température (T) correspondante.

7.  Méthode de régulation selon l'une des revendications précédentes, selon laquelle, à l'étape d), lesdits moyens de contrôle (8, 9) sont pilotés de telle manière que la température (T) de la batterie d'accumulateurs (5) atteigne une valeur cible (T$_{cib}$).

8.  Méthode de régulation selon la revendication 7, selon laquelle ladite valeur cible (T$_{cib}$) est prédéterminée.

9.  Méthode de régulation selon la revendication 7, selon laquelle ladite valeur cible (T$_{cib}$) est déterminée en fonction de l'un et/ou l'autre des paramètres suivants : la température extérieure, la première valeur (EdC$_{70}$) de l'état de charge (EdC), la seconde valeur (EdC$_{60}$) de l'état de charge (EdC), la troisième valeur (EdC$_{50}$) de l'état de charge (EdC), une information selon laquelle la batterie d'accumulateurs (5) est en charge ou en décharge, la durée de décharge moyenne de ladite batterie d'accumulateurs (5), la durée de charge moyenne de ladite batterie d'accumulateurs (5).

10. Véhicule automobile (1) comportant une batterie d'accumulateurs (5), un chargeur (6) pour charger ladite batterie d'accumulateurs (5), un moteur électrique (3) alimenté par ladite batterie d'accumulateurs (5), un moyen d'acquisition (16) d'un état de charge (EdC) de ladite batterie d'accumulateurs (5), un moyen de mesure (17) de la température (T) de ladite batterie d'accumulateurs (5), et des moyens de contrôle (8, 9) de la température (T) de ladite batterie d'accumulateurs (5), **caractérisé en ce qu'**il comporte une unité de pilotage (10) desdits moyens de contrôle (8, 9), adaptée en mettre en oeuvre un procédé de régulation selon l'une des revendications précédentes.

**Patentansprüche**

1.  Verfahren zu Regelung der Temperatur (T) einer Akkumulatorenbatterie (5) während des Ladens oder Entladens, **dadurch gekennzeichnet, dass** es Schritte enthält, die darin bestehen:

    a) aufeinanderfolgende Werte (EdC$_{60}$, EdC$_{70}$) eines Ladezustands (EdC) zu erfassen, der sich auf den Ladepegel der Akkumulatorenbatterie (5) bezieht,
    b) zwei Werte (T$_{60}$, T$_{70}$) der Temperatur (T) der Akkumulatorenbatterie (5) zu messen, wenn der Ladezustand nacheinander einen ersten Wert (EdC$_{70}$) und einen zweiten Wert (EdC$_{60}$) annimmt,
    c) abhängig von den im Schritt b) gemessenen Werten (T$_{60}$, T$_{70}$) der Temperatur (T) den Wert (T$_{est}$) der Temperatur (T) der Akkumulatorenbatterie (5) zu schätzen, wenn der Ladezustand (EdC) einen dritten Wert (EdC$_{50}$) erreicht hat, und
    d) Kontrolleinrichtungen (8, 9) der Temperatur (T) der Akkumulatorenbatterie (5) abhängig vom im Schritt c) geschätzten Wert (T$_{est}$) der Temperatur (T) zu steuern.

2.  Regelungsverfahren nach dem vorhergehenden Anspruch, wobei der Schritt a) kontinuierlich durchgeführt oder in regelmäßigen Zeitabständen wiederholt wird.

3.  Regelungsverfahren nach einem der vorhergehenden Ansprüche, wobei die Schritte b) bis d) ununterbrochen wiederholt werden.

**4.** Regelungsverfahren nach einem der Ansprüche 1 bis 3, wobei die ersten, zweiten und dritten Werte ($EdC_{50}$, $EdC_{60}$, $EdC_{70}$) des Ladezustands (EdC) vorbestimmt sind.

**5.** Regelungsverfahren nach einem der Ansprüche 1 bis 3, wobei mindestens einer der ersten, zweiten und dritten Werte ($EdC_{50}$, $EdC_{60}$, $EdC_{70}$) des Ladezustands (EdC) abhängig vom Wert ($EdC_{ini}$) des Ladezustands (EdC) der Akkumulatorenbatterie (5) zu Beginn des Ladens oder Entladens bestimmt wird.

**6.** Regelungsverfahren nach einem der vorhergehenden Ansprüche, wobei der Schritt c) mit Hilfe einer affinen mathematischen Funktion durchgeführt wird, die jedem Ladezustand (EdC) eine entsprechende Temperatur (T) zuweist.

**7.** Regelungsverfahren nach einem der vorhergehenden Ansprüche, wobei im Schritt d) die Kontrolleinrichtungen (8, 9) so gesteuert werden, dass die Temperatur (T) der Akkumulatorenbatterie (5) einen Zielwert ($T_{cib}$) erreicht.

**8.** Regelungsverfahren nach Anspruch 7, wobei der Zielwert ($T_{cib}$) vorbestimmt ist.

**9.** Regelungsverfahren nach Anspruch 7, wobei der Zielwert ($T_{cib}$) abhängig von dem einen und/oder anderen der folgenden Parameter bestimmt wird: der Außentemperatur, dem ersten Wert ($EdC_{70}$) des Ladezustands (EdC), dem zweiten Wert ($EdC_{60}$) des Ladezustands (EdC), dem dritten Wert ($EdC_{50}$) des Ladezustands (EdC), einer Information, gemäß der die Akkumulatorenbatterie (5) geladen oder entladen wird, der mittleren Entladedauer der Akkumulatorenbatterie (5), der mittleren Ladedauer der Akkumulatorenbatterie (5).

**10.** Kraftfahrzeug (1), das eine Akkumulatorenbatterie (5), ein Ladegerät (6) zum Laden der Akkumulatorenbatterie (5), einen von der Akkumulatorenbatterie (5) gespeisten Elektromotor (3), eine Erfassungseinrichtung (16) eines Ladezustands (EdC) der Akkumulatorenbatterie (5), eine Messeinrichtung (17) der Temperatur (T) der Akkumulatorenbatterie (5) und Kontrolleinrichtungen (8, 9) der Temperatur (T) der Akkumulatorenbatterie (5) aufweist, **dadurch gekennzeichnet, dass** es eine Steuereinheit (10) der Kontrolleinrichtungen (8, 9) aufweist, die geeignet ist, ein Regelungsverfahren nach einem der vorhergehenden Ansprüche durchzuführen.

**Claims**

**1.** Method of regulating the temperature (T) of an accumulator battery (5) in the course of charging or discharging, **characterized in that** it comprises the following steps:

  a) the acquisition of successive values ($CS_{60}$, $CS_{70}$) of the charge stage (CS) which is relative to the level of charge in said accumulator battery (5),
  b) the measurement of two values ($T_{60}$, $T_{70}$) of the temperature (T) of said accumulator battery (5), when said charge state successively assumes a first value ($CS_{70}$) and a second value ($CS_{60}$),
  c) the estimation, as a function of the values ($T_{60}$, $T_{70}$) of the temperature (T) measured in step b), of the value ($T_{est}$) of the temperature (T) in said accumulator battery (5) once said charge state (CS) has achieved a third value ($CS_{50}$), and
  d) the regulation of the means of control (8, 9) of the temperature (T) of said accumulator battery (5), as a function of the value ($T_{est}$) of the temperature (T) estimated in step c).

**2.** Regulating method according to the preceding claim, wherein said step a) is effected continuously, or is repeated at regular time intervals.

**3.** Regulating method according to either of the preceding claims, wherein steps b) to d) are repeated in a looped cycle.

**4.** Regulating method according to one of Claims 1 to 3, wherein said first, second and third values ($CS_{50}$, $CS_{60}$, $CS_{70}$) of the charge state (CS) are predetermined.

**5.** Regulating method according to one of Claims 1 to 3, wherein at least one of said first, second and third values ($CS_{50}$, $CS_{60}$, $CS_{70}$) of the charge state (CS) is determined as a function of the value ($CS_{ini}$) of the charge state (CS) of the accumulator battery (5) at the start of charging or discharging.

**6.** Regulating method according to one of the preceding claims, wherein step c) is executed using an affine mathematical function which associates a corresponding temperature (T) with each charge state (CS) .

**7.** Regulating method according to one of the preceding claims, wherein, in step d), said means of control (8, 9) are regulated such that the temperature (T) of the accumulator battery (5) achieves a target value ($T_{targ}$).

**8.** Regulating method according to Claim 7, wherein said target value ($T_{targ}$) is predetermined.

**9.** Regulating method according to Claim 7, wherein said target value ($T_{targ}$) is determined as a function of one and/or other of the following parameters: the exterior temperature, the first value ($CS_{70}$) of the charge state (CS), the second value ($CS_{60}$) of the charge state (CS), the third value ($CS_{50}$) of the charge state (CS), information to the effect that the accumulator battery (5) is charging or discharging, the average discharging time of said accumulator battery (5), the average charging time of said accumulator battery (5).

10. Motor vehicle (1) provided with an accumulator battery (5), a charger (6) for charging said accumulator battery (5), an electric motor (3) supplied by said accumulator battery (5), means for the acquisition (16) of the charge state (CS) of said accumulator battery (5), means for the measurement (17) of the temperature (T) in said accumulator battery (5), and means (8, 9) for the control of the temperature (T) in said accumulator battery (5), **characterized in that** it is provided with a command unit (10) for said means of control (8, 9) which is suitable for implementing a regulating method according to one of the preceding claims.

# Fig.1

# Fig.2

**EP 2 956 984 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110316486 A

- JP 07073907 B